# EUROPÄISCHE PATENTSCHRIFT

(11) **EP 4 331 087 B1**
(45) Veröffentlichungstag und Bekanntmachung des Hinweises auf die Patenterteilung: **29.01.2025**
(21) Anmeldenummer: 22708274.0
(22) Anmeldetag: 08.02.2022
(51) Int. Cl.: H02K 3/51, H02K 17/18

(54) **ROTOR FÜR EINE ELEKTRISCHE MASCHINE**
ROTOR FOR AN ELECTRIC MACHINE
ROTOR POUR UNE MACHINE ÉLECTRIQUE

(30) Priorität: 27.04.2021 AT 503152021
(43) Veröffentlichungstag der Anmeldung: 06.03.2024
(73) Patentinhaber: Andritz Hydro GmbH, 1120 Wien (AT)
(72) Erfinder: JOHN, Alexander, 8055 Graz (AT); WEINBERGER, Christoph, 8163 Fladnitz an der Teichalm (AT); STADLHOFER, Siegfried, 8102 Semriach (AT)
(74) Vertreter: Wirnsberger & Lerchbaum Patentanwälte OG
(86) Internationale Anmeldenummer: PCT/AT2022/060037
(87) Internationale Veröffentlichungsnummer: WO 2022/226554

(56) Entgegenhaltungen:
- CN-A- 104 218 715
- DE-T2- 69 306 173
- JP-A- H0 723 541
- JP-A- H06 253 485
- JP-A- H09 131 011
- JP-A- S57 122 644
- US-A- 5 606 212
- US-A1- 2005 275 306
- US-A1- 2010 079 030

## Beschreibung

Die Erfindung betrifft einen Rotor für eine elektrische Maschine, aufweisend ein Blechpaket mit Nuten, in welchen Unterstäbe und Oberstäbe angeordnet sind, welche sich in Axialrichtung über das Blechpaket hinaus zur Bildung eines Wickelkopfes erstrecken, wobei jeweils ein Unterstab einer Nut mit einem Oberstab einer anderen Nut im Wickelkopf verbunden ist und sich Unterstäbe und Oberstäbe axial außerhalb des Blechpaketes in einer Draufsicht an Kreuzungspunkten kreuzen und zwischen den Kreuzungspunkten Lücken verbleiben, wobei eine Stützeinrichtung vorgesehen ist, welche einen radial innerhalb des Wickelkopfes angeordneten Rückhaltekörper und zumindest einen Bügel mit zwei Schenkeln und einem Steg aufweist, wobei der Bügel sowohl mit dem Rückhaltekörper als auch mit einem Oberstab verbunden ist, um den Oberstab mittels des Rückhaltekörpers radial abzustützen.

Aus dem Stand der Technik sind Rotoren der eingangs genannten Art bekannt geworden, welche beispielsweise in Asynchron-Maschinen bei Pumpspeicherkraftwerken eingesetzt werden, wobei die Asynchron-Maschinen sowohl als Motor als auch als Generator eingesetzt sind.

Bei einem Betrieb wirken auf den Rotor und insbesondere auf die Oberstäbe und Unterstäbe aufgrund einer Rotation des Rotors um eine Rotorachse Zentrifugalkräfte. Die Oberstäbe und die Unterstäbe werden im Bereich des Blechpaketes üblicherweise durch Nutkeile gegen diese Zentrifugalkräfte abgestützt. Außerhalb des Blechpaketes, im Wickelkopf, ist dies nicht möglich, weswegen insbesondere aus dem Dokument US 5,606,212 A eine Stützeinrichtung bekannt geworden ist, welche einen Bügel aufweist, der einerseits radial innerhalb des Wickelkopfes an einer umlaufenden Ringscheibe gelagert ist und andererseits einen Oberstab und einen Unterstab umgreift, um diesen Oberstab und den Unterstab gegen die bei einem Betrieb wirkenden Zentrifugalkräfte abzustützen. Dabei sind Schenkel dieses Bügels durch zwei nebeneinander liegende Lücken im Rotorblechpaket geführt, sodass der Bügel von einem Inneren des Rotorwickelkopfes bis zu einem radialen Äußeren des Rotorwickelkopfes ragt.

Je nach konkreten Anforderungen an eine elektrische Maschine können insbesondere eine Polpaarzahl, ein Durchmesser und eine Länge des Rotorwickelkopfes sowie Abmessungen der Oberstäbe und der Unterstäbe und Winkel, unter welchen die Oberstäbe im Bereich des Wickelkopfes zu den Unterstäben stehen, variieren. Es hat sich gezeigt, dass mit der im Dokument US 5,606,212 vorgeschlagenen Konstruktion bei einigen Rotoren unzulässig hohe mechanische Belastungen auf den Rückhaltekörper, die Bügel und/oder die Unterstäbe wirken. Insbesondere bei Rotoren, bei welchen Lücken im Wickelkopf nahe beieinander liegen, führt die aus dem Dokument US 5,606,212 bekannte Konstruktion zu besonders schmalen und daher hoch beanspruchten Ringscheiben, bei welchen bereits durch Fertigungstoleranzen bedingten Abweichungen zu einem Überschreiten zulässiger mechanischer Grenzwerte führen könnten.

Hier setzt die Erfindung an. Aufgabe der Erfindung ist es, einen Rotor der eingangs genannten Art anzugeben, bei welchem eine Stabilisierung des Wickelkopfes auch bei besonders nahe beieinander liegenden Lücken im Wickelkopf auf robuste Weise möglich ist.

Diese Aufgabe wird erfindungsgemäß durch einen Rotor der eingangs genannten Art gelöst, bei welchem der Steg zwei Oberstäbe überspannt, sodass die Schenkel durch zwei Lücken ragen, welche an unterschiedliche Oberstäbe angrenzen.

Die Erfinder haben erkannt, dass bei einer entsprechenden Ausbildung ein Rückhaltekörper, welcher üblicherweise als umlaufender Ring ausgebildet ist, mit einem größeren Querschnitt eingesetzt werden kann und dadurch mechanische Belastungen reduziert werden. So ragen Schenkel der Bügel bei Vorrichtungen des Standes der Technik stets zwischen unmittelbar benachbarte Lücken, welche somit an denselben Oberstab angrenzen, sodass ein Bügel stets nur einen Oberstab umgreift.

Bei der erfindungsgemäßen Ausbildung des Rotors ragen die Schenkel somit durch zwei Lücken, welche üblicherweise durch zumindest eine weitere Lücke voneinander beabstandet sind und umgreift der Bügel somit in der Regel zumindest zwei Oberstäbe. Dadurch wird ein größerer Abstand zwischen den Schenkeln erreicht, welche innerhalb des Wickelkopfes den Rückhaltekörper üblicherweise umgreifen und mit diesem formschlüssig in Radialrichtung verbunden sind.

Die Schenkel der Bügel erstrecken sich üblicherweise ausschließlich in Radialrichtung. Der Steg, welcher die Bügel bevorzugt radial außen am Rotorwickelkopf verbindet, erstreckt sich üblicherweise etwa parallel zu einer Axialrichtung bzw. parallel zur Rotorachse. Entsprechend entspricht eine axiale Erstreckung des Rückhaltekörpers bzw. eines Rückhalteringes üblicherweise im Wesentlichen einer axialen Erstreckung des Steges.

Die Begriffe Axialrichtung, Radialrichtung und Umfangsrichtung sind hier im Sinne eines zylindrischen Koordinatensystems zu verstehen, wobei die Axialrichtung mit einer Rotorachse, um welche der Rotor bei bestimmungsgemäßem Betrieb drehbar in einem Stator angeordnet wird, zusammenfällt bzw. zu dieser Rotorachse parallel ist.

Als Kreuzungspunkte werden hier Punkte bezeichnet, an welchen sich ein Oberstab und ein Unterstab im Bereich des Wickelkopfes in einer Draufsicht bzw. bei Blickrichtung entlang der Radialrichtung kreuzen, wobei der Oberstab mit größerem Radialabstand zur Rotorachse als der Unterstab angeordnet ist. Als Lücken werden hier Positionen bezeichnet, an welchen bei entsprechender Blickrichtung weder ein Unterstab noch ein Oberstab angeordnet ist, sodass ein ungehinderter Durchtritt eines Bügels von einem Inneren des Rotorwickelkopfes bis zu einem Äußeren des Rotorwickelkopfes entlang der Radialrichtung ermöglicht ist.

Bei entsprechender Ausbildung überspannt der Steg somit in der Regel zumindest zwei Kreuzungspunkte, sodass durch einen Bügel in der Regel zumindest zwei Oberstäbe und zwei Unterstäbe mit der Stützeinrichtung in Radialrichtung kinematisch gekoppelt bzw. form- und/oder kraftschlüssig verbunden sind.

Durch einen entsprechend vergrößerten Querschnitt des Rückhaltekörpers kann die erfindungsgemäße Konstruktion auch bei Rotoren eingesetzt werden, bei welchen Lücken im Rotorwickelkopf sehr nah beieinander liegen, beispielsweise weil Oberstäbe und Unterstäbe sehr schmal ausgebildet sind und/oder sich Oberstäbe und Unterstäbe unter einem Winkel von nahezu 90° kreuzen, zumal eine Länge des Steges und somit eine axiale Erstreckung des Rückhaltekörpers nicht durch einen Abstand von zwei benachbarten Lücken definiert ist, sondern die axiale Erstreckung des Rückhaltekörpers auch ein Vielfaches eines Abstandes zwischen zwei benachbarten Lücken betragen kann.

Darüber hinaus wird eine Flächenpressung der Oberstäbe und der Unterstäbe reduziert.

Ferner ist ein entsprechender Rotor mit einer reduzierten Anzahl an Bügeln herstellbar, zumal ein Bügel bei einer entsprechenden Ausbildung mehrere Oberstäbe und Unterstäbe umgreifen und stabilisieren kann.

Der Rückhaltekörper weist bevorzugt eine axiale Erstreckung auf, welche einem mehrfachen, insbesondere einem zweifachen, eines Abstandes zwischen zwei Lücken des Rotorwickelkopfes entspricht, welche Lücken sich entlang einer Umfangsrichtung auf derselben Umfangsposition befinden, also nur axial voneinander beabstandet sind. Bei einer entsprechend großen Abmessung des Rückhaltekörpers wirken sich auch durch Fertigungstoleranzen bedingte Abweichungen geringer auf mechanische Spannungen im Rückhaltekörper aus, sodass eine einfache Herstellbarkeit gegeben ist.

Grundsätzlich kann der Bügel in jeder beliebigen Weise eingebaut werden, um den Rückhaltekörper mit dem Oberstab zu verbinden, sodass der Wickelkopf im entsprechenden Bereich durch den Bügel am Rückhaltekörper abgestützt und somit radial stabilisiert wird. Der Steg könnte somit grundsätzlich auch im Rotorwickelkopf radial innen angeordnet sein und dort mit dem Rückhaltekörper verbunden sein.

Bevorzugt ist jedoch vorgesehen, dass der Steg radial außerhalb der Oberstäbe angeordnet und mit zumindest zwei Oberstäben verbunden ist. Dadurch wird in einem Bereich zwischen Rotorwickelkopf und Statorwickelkopf ein einfacher und gleichzeitig robuster Aufbau erreicht.

Der Steg kann natürlich auch mehr als zwei Oberstäbe umgreifen, beispielsweise drei oder vier Oberstäbe.

Weiter kann der Bügel grundsätzlich in beliebiger Weise mit dem Rückhaltekörper verbunden sein, beispielsweise in den Rückhaltekörper eingeschraubt oder dergleichen.

Bevorzugt ist jedoch vorgesehen, dass der Rückhaltekörper ringförmig ausgebildet ist und die Schenkel bis zu einem Innendurchmesser des Rückhaltekörpers ragen, um insbesondere Druckspitzen zu reduzieren. Eine über den Bügel in ein Inneres des Wickelkopfes übertragene Radialraft wird dann bevorzugt über den Innendurchmesser des Rückhaltekörpers bzw. eine innenseitige Zylinderfläche auf den Rückhaltekörper aufgebracht.

Bevorzugt ist ein lösbar mit den Schenkeln verbundenes Verschlussglied vorgesehen. Durch dieses Verschlussglied kann der Bügel am Rückhaltekörper und dem Wickelkopf fixiert werden.

Üblicherweise ist der Rückhaltekörper über das Verschlussglied mit dem Bügel verbunden. Der Bügel liegt vorzugsweise radial innen am Rückhaltekörper an, sodass vom Steg an die Schenkel übertragene Zentrifugalkräfte, welche auf den Rotorwickelkopf wirken und vom Bügel aufgenommen werden, über das Verschlussglied auf einen Innendurchmesser des bevorzugt ringförmig ausgebildeten Rückhaltekörpers übertragen werden, üblicherweise über einen Flächenkontakt, um Druckspitzen zu vermeiden.

Somit wird in der Regel eine Radialkraft von den Oberstäben an den Steg, vom Steg an die Schenkel, von den Schenkeln auf das Verschlussglied und schließlich vom Verschlussglied auf den Rückhaltekörper übertragen, üblicherweise an einem Innendurchmesser des Rückhaltekörpers.

Es hat sich bewährt, dass das Verschlussglied radiale Durchgangsbohrungen aufweist, durch welche die Schenkel ragen, wobei den Schenkeln dem Verschlussglied nachgelagert Sicherungselemente, insbesondere Muttern, vorgesehen sind, welche das Verschlussglied auf den Schenkeln halten. Dadurch ist eine einfache Montage gewährleistet. Durch ein vordefinierbares Anziehdrehmoment der Muttern kann eine definierte Vorspannung in die Schenkel eingebracht werden, sodass der Rotorwickelkopf durch eine vordefinierbare Kraft an den Rückhaltekörper gepresst werden kann.

Um insbesondere Effekte eines Setzens und/oder eines Kriechens im Bereich des Bügels zu egalisieren, ist bevorzugt vorgesehen, dass zwischen den Sicherungselementen und dem Verschlussglied Federelemente, insbesondere Tellerfedern oder Schraubentellerfedern, angeordnet sind, welche bevorzugt mit einer vordefinierten Vorspannkraft vorgespannt sind. Bei einem Betrieb über lange Zeit auftretende Setzungseffekte können dadurch einfach ausgeglichen werden, sodass eine vordefinierte Vorspannung auch über einen langen Zeitraum aufrechterhalten werden kann. Ein manuelles Nachspannen der Muttern nach einer Einlaufphase ist damit nicht mehr erforderlich. Gleichzeitig werden unerwünscht hohe Vorspannungen in den Schenkeln während der Einlaufphase vermieden.

Die Federelemente können durch eine serielle und/oder parallele Kombination einzelner Federn, insbesondere einzelner Tellerfedern, gebildet sein.

Ferner können die Federelemente auch als ineinander geschraubte Schraubenfedern aus Flachdraht, sogenannte Schraubentellerfedern, ausgebildet sein. Verglichen mit einer Tellerfedersäule wird dabei eine erhöhte Lebensdauer erreicht. Weiter ergibt sich verglichen mit einer Tellerfedersäule eine vereinfachte Montage, zumal durch Einsatz einer Schraubentellerfeder mit entsprechender Länge eine mehreren Tellerfedern bzw. einer Tellerfedersäule entsprechende Charakteristik erreicht werden kann, sodass eine Bauteilanzahl reduziert wird.

Üblicherweise werden die Federelemente bei einer Montage auf eine vordefinierte Vorspannung gebracht, um über ein entsprechendes Entspannen der Federelemente während eines Betriebes Setzungseffekte ausgleichen zu können. Eine definierte Vorspannung kann beispielsweise durch eine Hülse bzw. eine Stahlhülse erreicht werden, welche parallel zu einer Tellerfedersäule oder in einer Schraubentellerfeder angeordnet ist, insbesondere in der Tellerfedersäule oder der Schraubentellerfeder angeordnet ist, und als Anschlag für eine Mutter dient, mit welcher Mutter die Tellerfedern bzw. die Schraubentellerfeder gespannt werden. Die Mutter kann somit nur bis zu einer durch eine Position des Anschlages bzw. eine Länge der Hülse definierten Position angezogen werden, wodurch eine maximale Verformung und somit eine Vorspannung des Federelementes eindeutig definierbar sind.

Eine definierte Vorspannung kann somit insbesondere ohne Einsatz eines hydraulischen Spannzylinders erreicht werden, für welchen häufig auch nicht ausreichend Platz verfügbar ist.

Besonders bevorzugt ist die Vorspannung derart gewählt, dass der Rotorwickelkopf, also Oberstäbe und Unterstäbe, erst oberhalb einer Nenndrehzahl vom Rückhaltekörper abheben. Somit wird auch bei vergleichsweise vielen Start-Stop-Zyklen eine geringe Spannungsamplitude in einem Bereich von Gewinden der Bügel erreicht, über welche die Muttern mit den Bügeln verbunden sind. Bei einem Störfall kann die Maschine über die Nenndrehzahl hinaus auf Lastabwurfsdrehzahl oder Durchgangsdrehzahl gehen. In diesen Fällen wirkt der Anschlag als Überlastschutz für die Feder.

Darüber hinaus können somit mit dem Anschlag unzulässig große Verformungen des Wickelkopfes im Fall besonders hoher Drehzahlen verhindert werden.

Die Schenkel des Bügels sind üblicherweise mechanisch hoch beansprucht, zumal auf diese die Fliehkräfte des Rotorwickelkopfes wirken. Es hat sich daher bewährt, dass die Schenkel Gewinde aufweisen, welche bevorzugt durch Gewindewalzen gebildet sind. Dadurch können die Sicherungselemente, welche insbesondere als Muttern ausgebildet sein können, auf robuste Weise am Bügel angeordnet werden.

Es hat sich bewährt, dass der Bügel aus einem austenitischen Material gebildet ist, insbesondere aus einem austenitischen Stahl. Dies ist einerseits aufgrund des im Rotorwickelkopf vorherrschenden Magnetfeldes günstig. Andererseits hat sich ein austenitisches Material auch in Bezug auf mechanische Eigenschaften als sehr vorteilhaft für eine entsprechende Anwendung erwiesen.

Um eine robuste Abstützung des Rotorwickelkopfes auch bei hohen Drehzahlen gewährleisten zu können, ist bevorzugt vorgesehen, dass der Bügel aus einem kaltverformten Metall, insbesondere einem kaltgezogenen Stahl, gebildet ist.

Mit Vorteil ist vorgesehen, dass der Rückhaltekörper ein ferritisches Material, insbesondere einen ferritischen Stahl, aufweist oder aus einem solchen Material gebildet ist. Dadurch können mechanische Anforderungen auf besonders zuverlässige Weise erfüllt werden.

Besonders bevorzugt ist hierzu vorgesehen, dass der Rückhaltekörper einen Feinkornstahl, insbesondere S460, oder einen vergüteten Feinkornstahl, insbesondere S550Q, aufweist.

Um besonders geringe magnetische Verluste im Wickelkopfbereich zu gewährleisten, ist bevorzugt vorgesehen, dass der Rückhaltekörper einen ferritischen Innenteil und einen nicht magnetischen Außenteil, welcher insbesondere aus Aluminium, einem Faserverbundwerkstoff oder einem Hartgewebe, beispielsweise Epoxidharz-Glashartgewebe (EPGC), besteht, aufweist. Der Rückhaltekörper kann beispielsweise einen ferritischen Innenring und einen nicht magnetischen Außenring, welcher beispielsweise aus Aluminium, einem Faserverbundwerkstoff oder einem Hartgewebe, beispielsweise EPGC, bestehen kann, aufweisen. Innenring und Außenring können auch relativ zueinander bewegbar sein. In diesem Fall kann der Außenring in Axialrichtung mit den Unterstäben und der Innenring in Axialrichtung starr mit dem Blechpaket gekoppelt sein. Dabei kann auch vorgesehen sein, dass eine Kontaktfläche zwischen Innenring und Außenring aus einem Material mit besonders niedrigen Reibungskoeffizienten gebildet ist, um einen Verschleiß zu minieren.

Eine besonders robuste Konstruktion wird erreicht, wenn der Rückhaltekörper in Axialrichtung starr mit dem Blechpaket verbunden ist. Der Rückhaltekörper kann hierzu beispielsweise durch Schrauben mit einer Druckplatte verbunden sein, welche Druckplatte wiederum mit dem Blechpaket starr verbunden ist.

Um zu verhindern, dass auf den Wickelkopf wirkende Fliehkräfte zu einer zusätzlichen mechanischen Beanspruchung des Blechpaketes führen, ist bevorzugt vorgesehen, dass der Rückhaltekörper in Radialrichtung bewegbar mit dem Blechpaket verbunden ist, insbesondere mittels einer radialen Führung. Somit ist sichergestellt, dass Fliehkräfte im Wickelkopfbereich nur zu einer Verformung des Wickelkopfes und des Rückhaltekörpers, jedoch nicht zu einer radialen Verformung des Blechpaketes führen, zumal der Rückhaltekörper dann in Radialrichtung vom Blechpaket entkoppelt ist. Die Führung kann beispielsweise Nuten im Rückhaltekörper oder in der Druckplatte sowie korrespondierende Führungszapfen in der Druckplatte oder im Rückhaltekörper aufweisen.

Bevorzugt ist vorgesehen, dass ein mit dem Rotorblechpaket starr verbundenes Bauteil, insbesondere eine Druckplatte, in Radialrichtung verlaufende erste Führungsmittel, insbesondere radiale Nuten, aufweist und der Rückhaltekörper korrespondierende zweite Führungsmittel, insbesondere Führungszapfen, aufweist, welche in die ersten Führungsmittel eingreifen, sodass der Rückhaltekörper durch die zusammenwirkenden Führungsmittel in Radialrichtung bewegbar und in Umfangsrichtung starr mit dem Blechpaket verbunden ist.

Es kann je nach Abmessungen des Rotorwickelkopfes grundsätzlich bereits ein einziger, in der Regel umlaufender, Rückhaltekörper ausreichend sein, welcher üblicherweise über einen Umfang verteilt angeordnete Bügel in Radialrichtung mit dem Rotorwickelkopf gekoppelt ist. Bevorzugt ist insbesondere bei sehr großen Wickelköpfen vorgesehen, dass in Axialrichtung mehrere, insbesondere drei, Rückhaltekörper vorgesehen sind, welche über radiale Führungsmittel in Umfangsrichtung kinematisch gekoppelt und in Radialrichtung relativ zueinander bewegbar sind, wobei die radialen Führungsmittel bevorzugt durch radiale Nuten und korrespondierende Führungszapfen gebildet sind, welche in die radialen Nuten eingreifen. Somit können sich die einzelnen Rückhaltekörper in Axialrichtung und in Umfangsrichtung aneinander bzw. am Rotorblechpaket abstützen und sind diese dennoch relativ zueinander in Radialrichtung bewegbar. Dies ist insbesondere deshalb von Vorteil, weil der Rotorwickelkopf an einem axialen Ende eine größere radiale Verformung als in einem Blechpaket nahen Bereich aufweisen kann.

Für eine robuste axiale Verbindung der Rückhaltekörper mit dem Rotorblechpaket hat es sich bewährt, dass die Rückhaltekörper durch Schrauben axial mit der Druckplatte verbunden sind, wobei sich die Schrauben durchgehend von einem axial äußersten Rückhaltekörper bis zur Druckplatte erstrecken und insbesondere unter einer definierten Vorspannung stehen. Um eine radiale Bewegbarkeit zwischen den einzelnen Rückhaltekörpern dennoch zu gewährleisten, können die Schrauben beispielsweise durch Bohrungen in den Rückhaltekörpern geführt sein, welche größer als die Schrauben sind.

Elektrische Maschinen mit Rotorblechpaketen werden häufig in der Weise hergestellt, dass das Rotorblechpaket auf einen Rotorkörper aufgeschrumpft wird, wobei für eine Belüftung des Rotorblechpaketes von einem Inneren sich in Axialrichtung erstreckende Öffnungen am Rotorkörper vorgesehen sein können. Das Aufschrumpfen des Rotorblechpaketes führt somit zu einer Verformung des Rotorblechpaketes, welches mit den Öffnungen bzw. Armen korrespondiert, auf welche das Rotorblechpaket aufgeschrumpft ist.

Um dennoch eine besonders zuverlässige Führung des Rückhaltekörpers in Radialrichtung auch bei Ausbildung des Rotors mit einem Schrumpfsitz zu gewährleisten und eine Bewegung des Rückhaltekörpers relativ zum Rotorblechpaket in Umfangsrichtung zu vermeiden, hat sich eine Konstruktion bewährt, bei welcher der Rotor einen Rotorkörper mit entlang einer Umfangsrichtung verteilt angeordneten Armen und zwischen den Armen angeordneten Öffnungen aufweist, durch welche dem Rotorblechpaket eine Kühlluft zuführbar ist, wobei das Blechpaket auf den Rotorkörper aufgeschrumpft ist, wobei die ersten Führungsmittel, welche sich radial erstrecken, entlang einer Umfangsrichtung an Positionen angeordnet sind, welche mit Positionen der Arme im Bereich einer Druckplatte und/oder mit Positionen mittig zwischen den Armen im Bereich der Druckplatte korrespondieren. So wird die Druckplatte bzw. auch das Rotorblechpaket beim Aufschrumpfen an diesen Positionen nur radial verformt und kommt es in diesen Bereichen nicht zu einer bereichsweisen Verwindung, wodurch die Führungen gekrümmt werden würden und eine ordnungsgemäße Funktion derselben nicht mehr unter allen Betriebsbedingungen gewährleistet wäre. Diese Positionen mittig an den Armen und mittig zwischen den Armen können daher auch als verwindungsfreie Bereiche bezeichnet werden.

Üblicherweise sind die Stäbe etwa parallel zur Axialrichtung orientiert. Weiter sind die Schenkel der Bügel üblicherweise etwa in Radialrichtung orientiert. Dadurch werden die Schenkel im Wesentlichen nur auf Zug beansprucht und wird insbesondere eine Biege- und Torsionsbeanspruchung der Schenkel im Wesentlichen vermieden.

Abhängig von einer Größe des Wickelkopfes kann vorgesehen sein, dass entlang einer Umfangsrichtung verteilt mehrere Bügel angeordnet sind. Die Bügel sind in Umfangsrichtung üblicherweise regelmäßig verteilt über einen gesamten Umfang des Rotorwickelkopfes positioniert.

Weiter kann es je nach Größe des Wickelkopfes günstig sein, wenn in Axialrichtung mehrere Bügel vorgesehen sind. Es sind somit bevorzugt Bügel sowohl in Umfangsrichtung auch als in Axialrichtung verteilt über den Rotorwickelkopf angeordnet, um den Rotorwickelkopf gleichmäßig an mehreren Positionen mittels des innenliegenden Rückhaltekörpers zu stabilisieren.

Üblicherweise ist vorgesehen, dass der Rückhaltekörper die Rotorachse umschließt und insbesondere plattenförmig ausgebildet ist, vorzugsweise ringförmig, besonders bevorzugt als Ringscheibe. Auf den Rückhaltekörper wirkenden Zentrifugalkräfte können dann besonders gut aufgenommen werden, sodass sich eine gute Stabilisierung des Wickelkopfes ergibt.

Wie ausgeführt kann es günstig sein, wenn Schenkel des Bügels unter einer Vorspannung stehen, sodass der Rückhaltekörper gegen einen oder mehrere Unterstäbe des Rotorwickelkopfes gepresst wird. Bei einem Betrieb erwärmen sich Oberstäbe und Unterstäbe des Rotorwickelkopfes, welche in der Regel aus Kupfer bestehen bzw. Kupfer aufweisen und sich daher auch in Axialrichtung dehnen. Der Rückhaltekörper kann wie ausgeführt axial starr mit dem Blechpaket verbunden sein, insbesondere über Schrauben, und einer vom Wickelkopf abweichenden, insbesondere geringeren, Dehnung in Axialrichtung unterworfen sein. Um Beschädigungen bei einer Relativbewegung zwischen Rückhaltekörper und den Unterstäben in Axialrichtung sowie thermische Spannungen zu vermeiden, ist bevorzugt vorgesehen, dass zwischen dem Rückhaltekörper und den Unterstäben eine Gleiteinrichtung angeordnet ist, welche an zumindest einer Seite eine Oberfläche aufweist, welche durch ein Material mit einem geringen Reibungskoeffizienten gebildet ist, insbesondere durch eine Teflon-Carbon-Platte. Die Gleiteinrichtung ist mit Vorteil ebenfalls als Bauteil ausgebildet, welches die Rotorachse umschließt.

Mit Vorteil ist die Gleiteinrichtung starr mit den Unterstäben und axial bewegbar mit dem Rückhaltekörper verbunden. Die Gleiteinrichtung gleitet somit in der Regel mit jener Oberfläche, welche durch ein Material mit einem geringen Reibungskoeffizienten gebildet ist, am Rückhaltekörper bzw. einem starr mit diesem verbundenen Bauteil.

Bevorzugt weist die Gleiteinrichtung eine Gleitlage auf, welche aus einem Material mit einem geringen Reibungskoeffizienten gebildet ist, insbesondere durch eine Teflon-Carbon-Platte mit einer radialen Höhe von 1 mm bis 20 mm, insbesondere 2 mm bis 10 mm.

Weiter kann es günstig sein, wenn die Gleiteinrichtung eine Lage aufweist, welche durch ein paramagnetisches Material, insbesondere durch Aluminium oder ein Epoxidharz-Glashartgewebe, gebildet ist, wobei bevorzugt die Lage in Axialrichtung durchsetzende Bohrungen vorgesehen sind. Durch die Bohrungen kann somit auch eine Belüftung des Rotorwickelkopfes in diesem Bereich verbessert werden. Die Lage erstreckt sich üblicherweise im Umfangsrichtung vollständig um die Rotorachse und trennt somit über einen gesamten Umfang den Rückhaltekörper, welcher aus einem ferromagnetischen Material bestehen oder ein solches Material aufweisen kann, von den Unterstäben.

Zur Vermeidung von Kriechströmen kann es günstig sein, wenn die Gleiteinrichtung eine metallische Lage aufweist, welche von den Unterstäben durch eine mit der metallischen Lage starr verbundene Isolierlage getrennt ist, wobei die Isolierlage insbesondere Epoxidharz-Glashartgewebe aufweist.

Durch diese Isolierlage kann die Gleiteinrichtung auch an den Unterstäben abgestützt werden.

Weitere Merkmale, Vorteile und Wirkungen der Erfindung ergeben sich anhand der nachfolgend dargestellten Ausführungsbeispiele. In den Zeichnungen, auf welche dabei Bezug genommen wird, zeigen:
Fig. 1 und 2 Details eines erfindungsgemäßen Rotors;
Fig. 3 einen Bügel;
Fig. 4 einen Teil eines Rotors;
Fig. 5 ein weiteres Detail eines Rotors;
Fig. 6 ein Detail einer Gleiteinrichtung;
Fig. 7 ein weiteres Detail eines Rotors in Explosionsdarstellung;
Fig. 8 eine Draufsicht auf einen Rotor;
Fig. 9 ein Detail eines weiteren Rotors;
Fig. 10 und 11 ein Detail eines weiteren Rotors.

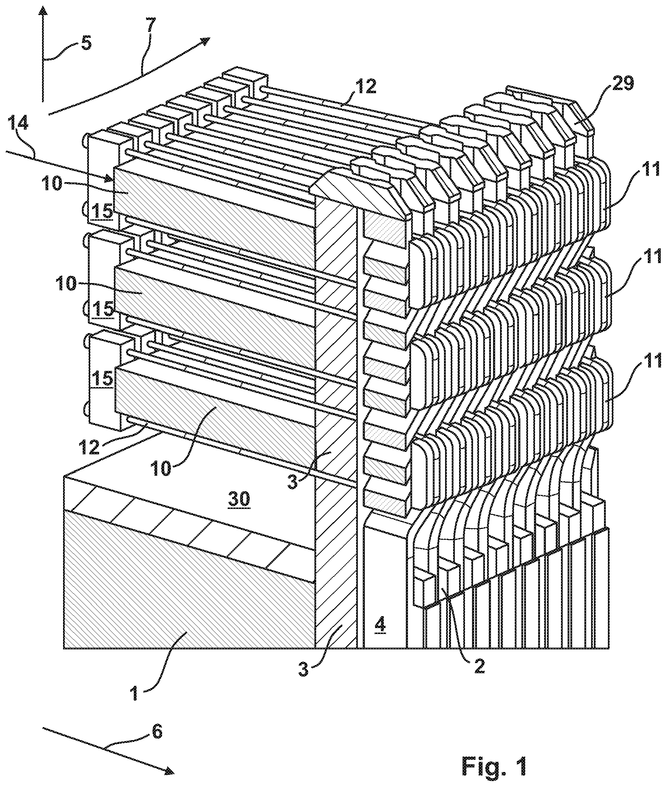

Fig. 1 bis 3 zeigen einen Bereich eines Wickelkopfes eines erfindungsgemäßen Rotors, wobei auch ein Teil eines Blechpaketes 1 samt einer endseitig am Blechpaket 1 angeordneten Druckplatte 30 dargestellt ist. Wie ersichtlich weist der Rotor Oberstäbe 4 und Unterstäbe 3 auf, welche in Nuten 2 im Blechpaket 1 angeordnet und außerhalb des Blechpaketes 1 verbunden sind, wobei wie bei derartigen Maschinen, welche als Asynchronmaschinen ausgebildet sein können, üblich stets ein Unterstab 3 einer Nut 2 mit einem Oberstab 4 einer anderen Nut 2 verbunden ist, hier durch axial endseitig an den Oberstäben 4 und Unterstäben 3 angeordnete Stabverbinder 29.

Während die Oberstäbe 4 und Unterstäbe 3 sich im Blechpaketbereich hier nur in Axialrichtung 5 erstrecken, erstrecken sich Oberstäbe 4 und Unterstäbe 3 axial außerhalb des Blechpaketes 1 bzw. im Wickelkopfbereich auch entlang einer Umfangsrichtung 7, um eine Verbindung zwischen einem Oberstab 4 und einem Unterstab 3 zweier in Umfangsrichtung 7 beanstandeter Nuten 2 herzustellen. Im dargestellten Ausführungsbeispiel erstrecken sich die Oberstäbe 4 unter einem Winkel von etwa 45° zur Rotorachse 23 bzw. zur Axialrichtung 5, welche parallel zur Rotorachse 23 ist, in Umfangsrichtung 7, während sich die Unterstäbe 3 etwa entgegensetzt unter einem Winkel von etwa - 45° zur Rotorachse 23 in Umfangsrichtung 7 erstrecken.

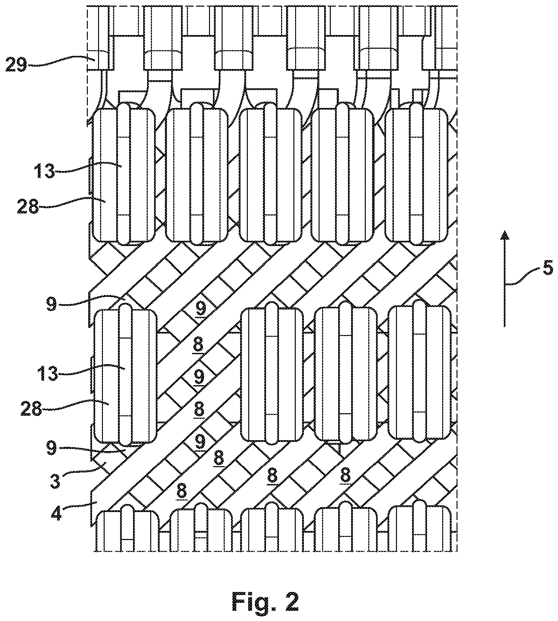

Wie in Fig. 2 ersichtlich, kreuzen die Oberstäbe 4 daher die Unterstäbe 3 unter einem Winkel von etwa 90° an Kreuzungspunkten 8. Zwischen den Kreuzungspunkten 8 verbleiben in der in Fig. 2 dargestellten Draufsicht bzw. bei Blickrichtung in Radialrichtung 6 Lücken 9. Durch einige diese Lücken 9 ragen Schenkel 12 von Bügeln 11, welche den Wickelkopf radial abstützen, indem ein die Schenkel 12 der Bügel 11 verbindender Steg 13 außenseitig wie dargestellt jeweils zwei Oberstäbe 4 überspannt und diese somit radial mit einem innerhalb des Wickelkopfes angeordneten Rückhaltekörper 10 koppelt. In Fig. 2 ist einer dieser Bügel 11 samt einem Distanzstück 28 ausgeblendet, sodass ersichtlich ist, dass die einzelnen Bügel 11 jeweils zwei Oberstäbe 4 und zwei Unterstäbe 3 sowie eine zwischen diesen angeordnete Lücke 9 übergreifen.

Für eine radiale Abstützung der Bügel 11 ist radial innen im Wickelkopf an den Schenkeln 12 jedes Bügels 11 ein Verschlussglied 15 vorgesehen, welches zwei Durchgangsbohrungen aufweist, durch welche die Schenkel 12 ragen und welches Verschlussglied 15 an einem Innendurchmesser 14 des hier ringförmig ausgebildeten Rückhaltekörpers 10 anliegt, um den Rückhaltekörper 10 über das Verschlussglied 15 und den Bügel 11 mechanisch mit den Oberstäben 4 zu koppeln. Das Verschlussglied 15 ist auf den Schenkeln 12 durch Muttern 16 gesichert.

Die Stege 13 sind mechanisch mit den Oberstäben 4 gekoppelt, welche diese überspannen, hier mittelbar über ein Distanzstück 28, welches zur Vermeidung von Druckspitzen an den Oberstäben 4 dient. Somit wird eine radiale Steifigkeit des Wickelkopfes durch die Bügel 11, welche den ringförmigen Rückhaltekörper 10 mit den Oberstäben 4 und mittelbar über die Oberstäbe 4 auch mit den Unterstäben 3 verbinden, erhöht, weswegen die Bügel 11 samt den Rückhaltekörper 10 hier Stützeinrichtungen für den Wickelkopf bilden.

Im dargestellten Ausführungsbeispiel sind in Axialrichtung 5 drei Rückhaltekörper 10 angeordnet und sind entsprechend auch drei Reihen von Bügeln 11 entlang der Axialrichtung 5 vorgesehen, wobei jede Reihe über eine Umfangsrichtung 7 verteilt angeordnete Bügel 11 aufweist. Die Stege 13 der Bügel 11 erstrecken sich hier in Axialrichtung 5. Wie dargestellt überspannen die Stege 13 hier jeweils zwei Oberstäbe 4, sodass die Schenkel 12 der Bügel 11 in Lücken 9 angeordnet sind, welche an unterschiedliche Oberstäbe 4 angrenzen. Natürlich können die Bügel 11 auch mehr als zwei Oberstäbe 4 bzw. mehr als eine Lücke 9 überspannen.

Dadurch wird trotz des Kreuzungswinkels von Oberstäben 4 und Unterstäben 3 von etwa 90°, welcher hier in Verbindung mit vergleichsweise schmalen Oberstäben 4 und Unterstäben 3 zu einem geringen axialen Abstand der Lücken 9 führt, ein großer Schenkelabstand 31 zwischen den Schenkeln 12 der Bügel 11 erreicht. Dieser entspricht somit zumindest einem doppelten Abstand zweier axial benachbarter Lücken 9.

Die Schenkel 12 erstrecken sich wie dargestellt hier ausschließlich in Radialrichtung 6, um eine im Wesentlichen ausschließliche Zugbeanspruchung der Schenkel 12 zu erreichen. Der Rückhaltekörper 10 ist jeweils zwischen zwei Schenkeln 12 eines Bügels 11 angeordnet, weswegen durch einen großen Schenkelabstand 31 ein entsprechend großer Rückhaltekörper 10 erreicht wird, welcher entsprechende Kräfte aufnehmen kann.

Die drei, an unterschiedlichen Axialpositionen angeordneten Rückhaltekörper 10 sind hier als umlaufende Ringe ausgebildet und können somit eine unzulässige Verformung des Rotorwickelkopfes durch die Koppelung über die Bügel 11 verhindern bzw. auftretende Fliehkräfte aufnehmen. Hierzu sind die Schenkel 12 der Bügel 11 radial innen über ein Verschlussglied 15 mit den Rückhaltekörpern 10 gekoppelt.

Die Begriffe Axialrichtung 5, Radialrichtung 6 und Umfangsrichtung 7 sind hier im Sinne eines zylindrischen Koordinatensystems zu verstehen, wobei die Axialrichtung 5 mit einer Rotorachse 23, um welche der Rotor bei bestimmungsgemäßem Betrieb drehbar in einem Stator angeordnet wird, zusammenfällt bzw. zu dieser Rotorachse 23 parallel ist. Folglich korrespondiert die Umfangsrichtung 7 mit einer Rotationsrichtung, entlang welcher der Rotor bei bestimmungsgemäßem Betrieb im Stator rotiert.

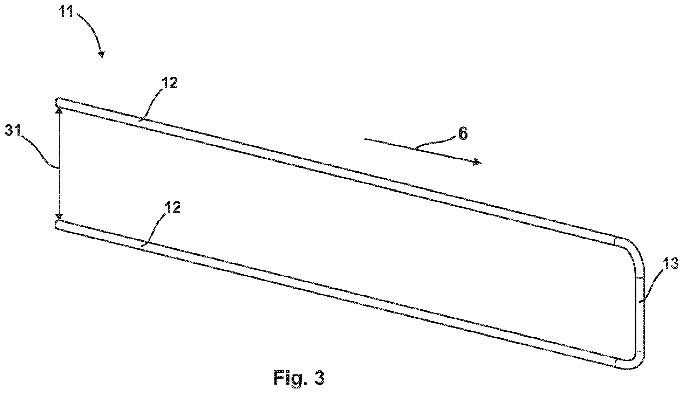

Fig. 3 zeigt einen Bügel 11 einer entsprechenden Stützeinrichtung im Detail, welcher hier u-förmig ausgebildet ist. Wie ersichtlich weist der Bügel 11 zwei etwa parallele Schenkel 12 auf, welche durch einen Steg 13 verbunden sind, der normal zu den Schenkeln 12 ausgerichtet ist. Endseitig an den Schenkeln 12 sind üblicherweise Gewinde angeordnet, sodass das Verschlussglied 15 mittels zweier Muttern 16 am Bügel 11 befestigt werden kann. Die Gewinde sind bevorzugt durch Gewindewalzen bzw. Gewinderollen hergestellt, um eine hohe Festigkeit auch im Gewindebereich zu gewährleisten. Der Bügel 11 ist in der Regel durch einen austenitischen, kaltgezogenen Stahl gebildet, wodurch magnetisch günstige Eigenschaften für eine Anwendung im Wickelkopfbereich und gleichzeitig eine hohe Festigkeit erreicht werden.

Zwischen den Schenkeln 12 des Wickelkopfes ist innerhalb des Wickelkopfes üblicherweise der bevorzugt ringförmig ausgebildete Rückhaltekörper 10 angeordnet, weswegen eine axiale Erstreckung des in Fig. 3 nicht dargestellten Rückhaltekörpers 10, welcher beispielsweise als Rückhaltering ausgebildet sein kann, bzw. ein Querschnitt desselben durch einen Schenkelabstand 31 definiert sein kann. Bei der erfindungsgemäßen Ausbildung eines entsprechenden Rotors wird ein vergleichsweise großer Schenkelabstand 31 auch bei nahe nebeneinander liegenden Lücken 9 erreicht, zumal die Schenkel 12 durch Lücken 9 ragen, welche an unterschiedliche Oberstäbe 4 bzw. Unterstäbe 3 angrenzen, sodass zwischen den Lücken 9, durch welche die Schenkel 12 ragen, in der Regel zumindest eine weitere Lücke 9 angeordnet ist, welche vom Steg 13 überspannt wird.

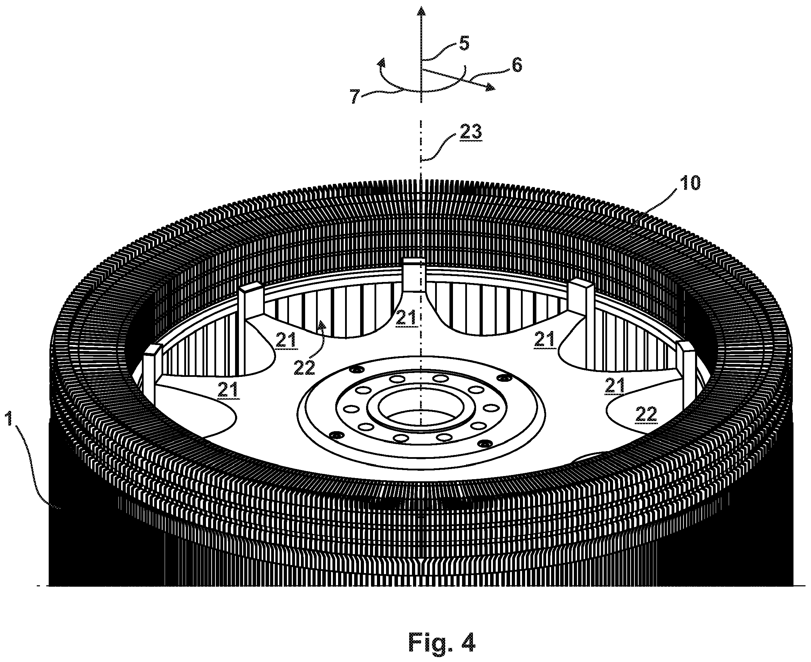

Fig. 4 zeigt einen Rotor in isometrischer Ansicht. Wie ersichtlich weist der Rotor einen Rotorkörper mit um eine Rotorachse 23 verteilt angeordneten Armen 21 auf, zwischen welchen Öffnungen 22 positioniert sind. Über diese Öffnungen 22 kann Luft zu einem Innenradius des Blechpaktes transportiert werden, um dieses zu belüften bzw. zu kühlen. Das Blechpaket 1 ist auf die Arme 21 des Rotorkörpers aufgeschrumpft, um eine stabile Verbindung zwischen dem Blechpaket 1 und dem Rotorkörper zu bilden.

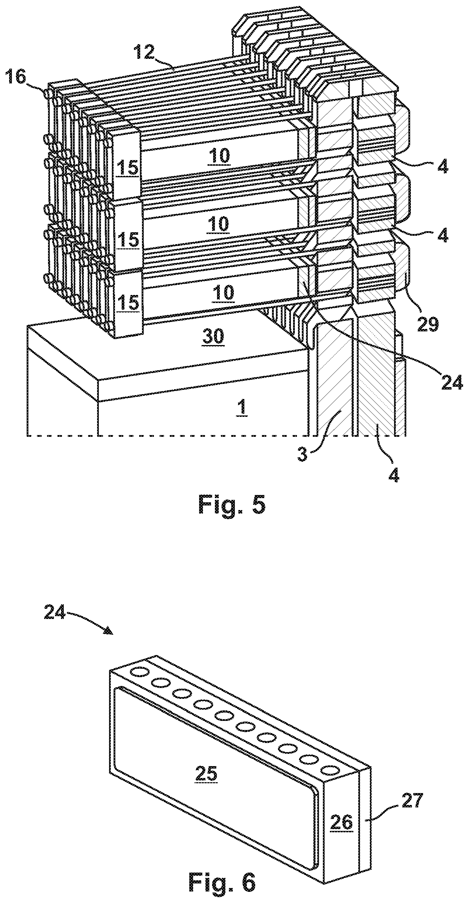

Fig. 5 zeigt ein Detail eines Rotors in einer weiteren Ansicht. Die Rückhaltekörper 10 sind üblicherweise durch nicht dargestellte Schrauben in Axialrichtung 5 im Wesentlichen starr mit dem Rotorblechpaket verbunden. Unterstäbe 3 und Oberstäbe 4 unterliegen bei einem Betrieb einer Erwärmung und somit einer thermischen Dehnung, wodurch eine Relativbewegung in Axialrichtung 5 zwischen Unterstäben 3 und Oberstäben 4 einerseits und den Rückhaltekörpern 10 andererseits bedingt ist. Um zu verhindern, dass diese Relativbewegung zu Beschädigungen insbesondere einer Isolierung der Unterstäbe 3 führt, sind zwischen den Rückhaltekörpern 10 und den Unterstäben 3 Gleiteinrichtungen 24 angeordnet.

Fig. 6 zeigt ein Detail einer derartigen Gleiteinrichtung 24, welche starr mit den Unterstäben 3 verbindbar ist. Die Gleiteinrichtung 24 weist radial innenseitig eine Oberfläche auf, welche durch ein Material mit einem geringen Reibungskoeffizienten gebildet ist, üblicherweise durch eine Teflon-Carbon-Platte 25, welche am Rückhaltekörper 10 anliegen kann. Diese Teflon-Carbon-Platte 25 ermöglicht somit eine reibungsarme Relativbewegung zwischen den Unterstäben 3, mit welchem die Gleiteinrichtung 24 üblicherweise in Axialrichtung 5 gekoppelt ist, und dem entsprechend angrenzenden Rückhaltekörper 10.

Die Rückhaltekörper 10 weisen üblicherweise ein magnetisches Material auf bzw. können aus einem Feinkornstahl oder dergleichen bestehen. Um magnetische Verluste im Wickelkopfbereich zu minimieren, ist bevorzugt vorgesehen, dass die Gleiteinrichtung 24 eine Lage 26 aufweist, welche durch ein paramagnetisches Material, insbesondere durch Aluminium oder Epoxidharz-Glashartgewebe, gebildet ist. Durch diese Lage 26 wird somit ein Abstand zwischen dem magnetischen Rückhaltekörper 10 bzw. einem magnetischen Teil des Rückhaltekörpers 10 und den Unterstäben 3 gewährleistet. Um Kriechströme zu vermeiden, ist außenseitig an der Gleiteinrichtung 24 eine Isolierlage 27 angeordnet, welche beispielsweise aus Epoxidharz-Glashartgewebe bestehen kann. Wenn die Lage 26 aus einem isolierenden Material besteht, kann die Isolierlage 27 auch einteilig mit der Lage 26 ausgebildet sein und beispielsweise aus Epoxidharz-Glashartgewebe bestehen.

Der Feinkornstahl kann somit einen Innenring des Rückhaltekörpers 10 bilden, während die Lage 26 aus Aluminium bzw. die Gleiteinrichtung einen Außenring bilden kann, wobei der Außenring einen Abstand zwischen den Unterstäben 3 und dem Innenring gewährleistet und gleichzeitig den Innenring in radialer Richtung mit den Unterstäben 3 verbindet.

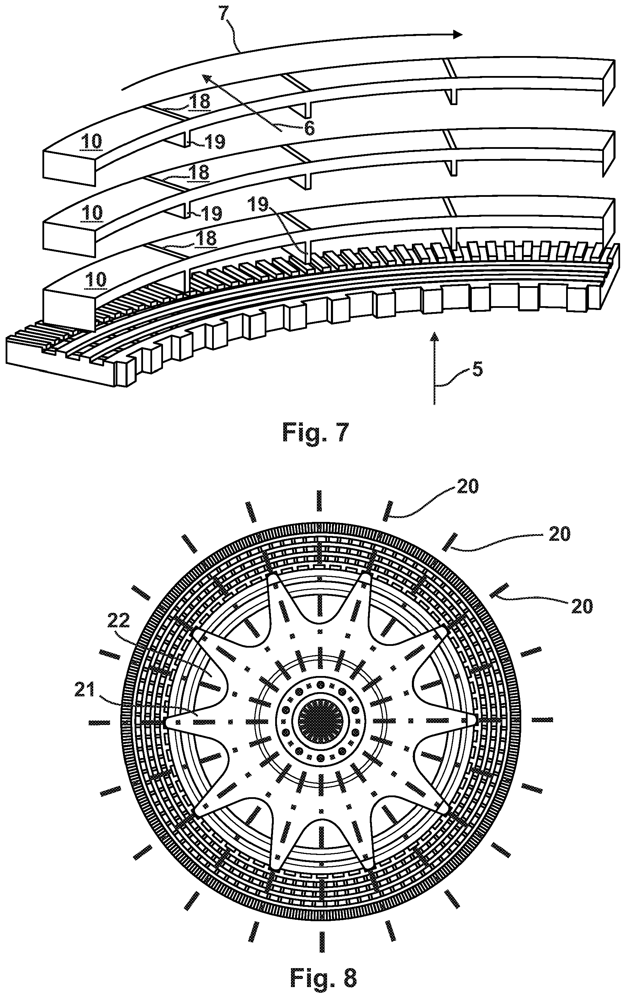

Fig. 7 zeigt in einer Explosionsdarstellung einen Ausschnitt von drei Rückhaltekörpern 10 sowie einen Teil des Blechpaketes 1. Die Rückhaltekörper 10 weisen jeweils Führungszapfen 19 und radiale Nuten 18 auf, welche sich jeweils entlang der Radialrichtung 6 erstrecken, sodass radiale Führungen gegeben sind und die einzelnen Rückhaltekörper 10 relativ zueinander aufgrund der radialen Führungen radial bewegbar, jedoch in Umfangsrichtung 7 kinematisch miteinander gekoppelt sind. Entsprechende radiale Nuten 18 sind auch an der hier nicht dargestellten Druckplatte 30 vorgesehen, sodass die Rückhaltekörper 10 auch relativ zur Druckplatte 30 radial bewegbar, jedoch in Umfangsrichtung 7 formschlüssig mit der Druckplatte 30 verbunden sind. In Axialrichtung 5 sind die Rückhaltekörper 10 wie ausgeführt üblicherweise durch nicht dargestellte Schrauben starr mit dem Blechpaket 1 gekoppelt, wobei sich diese Schrauben von der Druckplatte 30 bis zu einem axial äußersten Rückhaltekörper 10 erstrecken können.

Fig. 8 zeigt eine Draufsicht auf den Rotor, wobei schematisch verwindungsfreie Bereiche 20 des Rotors durch strichpunktierte Linien angedeutet sind, entlang welcher die radialen Führungseinrichtungen, üblicherweise radiale Nuten 18 und korrespondierende Führungszapfen 19, angeordnet sind. Diese verwindungsfreien Bereiche 20 des Blechpaketes 1 und der Druckplatte 30 sind dabei an Positionen mittig an den Armen 21 des Rotorkörpers sowie mittig zwischen diesen Armen 21 angeordnet. Durch eine Anordnung der radialen Führungen, welche durch Nuten 2 und korrespondierende Führungszapfen 19 oder dergleichen gebildet werden können, wird eine Verwindung der Führungen bei einem teilweisen Öffnen bzw. Schließen des Schrumpfsitzes während eines Betriebes auf einfache Weise vermieden, zumal das Rotorblechpaket und die Druckplatte 30 des Rotors in diesen Bereichen nur radial verformt werden.

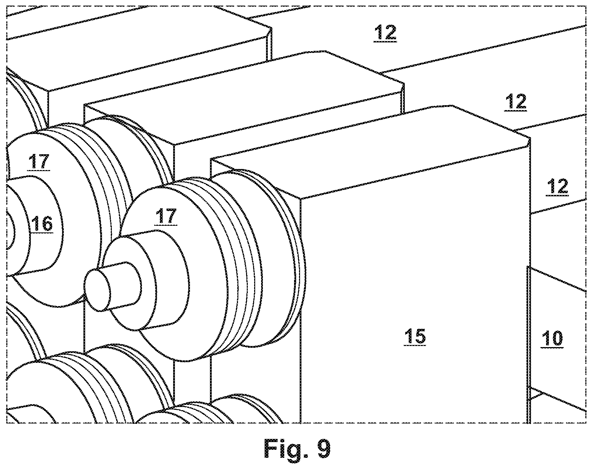

Fig. 9 zeigt ein Detail eines weiteren Ausführungsbeispiels, wobei ein radial innen liegendes Ende von Stützeinrichtungen dargestellt ist. Wiederum ist auch hier radial innenseitig am Bügel 11 ein Verschlussglied 15 vorgesehen, durch welches der Bügel 11 verschlossen und mit dem Rückhaltekörper 10 gekoppelt ist. Auch hier sind die Schenkel 12 der Bügel 11 durch das Verschlussglied 15 geführt und sind endseitig Muttern 16 auf die Schenkel 12 aufgeschraubt, um das Verschlussglied 15 auf den Bügeln 11 zu fixieren. Ergänzend sind hier als Tellerfedern 17 ausgebildete Federelemente zwischen den Muttern 16 und den Verschlussgliedern 15 vorgesehen, wobei hier jeweils drei Tellerfedern 17 seriell zwischen den Muttern 16 und dem Verschlussglied 15 positioniert sind. Dadurch kann eine vordefinierte Vorspannung in die Schenkel 12 eingebracht werden, welche über die Federelemente auch bei Setzungsvorgängen aufrechterhalten werden kann. Dadurch kann ein Nachstellen der Muttern 16 nach einem Einlauf des Rotors vermieden werden.

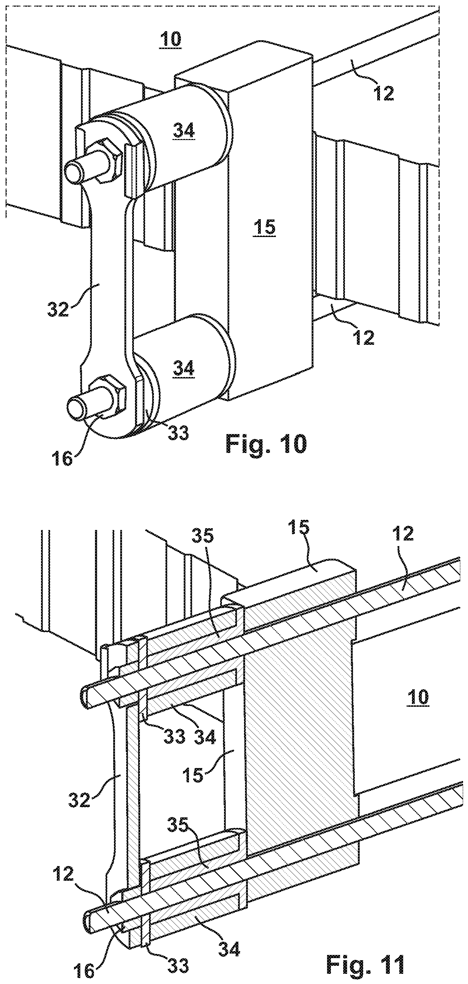

Fig. 10 und 11 zeigen ein weiteres Ausführungsbeispiel im Detail, wobei wiederum ein radial innen liegendes Ende einer Stützeinrichtung dargestellt ist. Auch hier sind die Schenkel 12 der Bügel 11 durch das Verschlussglied 15 geführt und sind endseitig Muttern 16 auf die Schenkel 12 aufgeschraubt, um das Verschlussglied 15 auf den Bügeln 11 zu fixieren. Ferner sind auch hier Federelemente vorgesehen, welche die Bügel 11 über die Muttern 16 mit dem Verschlussglied 15 verbinden, wobei zwischen den Federelementen und den Muttern 16 hier zusätzliche Stahlscheiben 33 angeordnet sind. Fig. 10 zeigt dabei das Detail in isometrischer Ansicht, während Fig. 11 eine Schnittdarstellung zeigt.

Wie in Fig. 11 ersichtlich sind dabei die Federelemente, welche hier als Schraubentellerfedern 34 ausgebildet sind, konzentrisch zu den Bügeln 11 angeordnet und ist jeweils parallel zu den Schraubentellerfedern 34, hier innerhalb der Schraubentellerfedern 34, eine Hülse 35 angeordnet, welche als Anschlag dient. Mittels der Hülse 35 können die Federelemente somit auf einfache Weise bis zu einer definierten Verformung bzw. einer definierten Vorspannung vorgespannt werden, bei welcher Verformung der Schraubentellerfedern 34 die Stahlscheiben 33 jeweils an den Hülsen 35 anliegen. Die gewählte Vorspannung definiert somit in Verbindung mit den Federelementen Abmessungen der Hülsen 35 und kann beispielsweise derart gewählt sein, dass ein Abheben des Wickelkopfes von der Stützeinrichtung bis zur Nenndrehzahl der Maschine zuverlässig verhindert ist. Im Fall einer über die Nenndrehzahl hinausgehenden Drehzahl, welche beispielsweise in einem Fehlerfall auftreten kann, verhindern die Hülsen 35 zuverlässig Beschädigungen an den Federelementen, zumal die als Anschlag wirkenden Hülsen 35 dann eine unzulässig große Verformung der Federelemente verhindern.

Fig. 10 und 11 zeigen ferner eine Losdrehsicherung 32 der Muttern 16, welche mit beiden Muttern 16 formschlüssig verbunden ist, um ein unbeabsichtigtes Lösen der Muttern 16 während des Betriebes zu verhindern. Im dargestellten Ausführungsbeispiel sind sowohl die Losdrehsicherung 32 als auch die Stützeinrichtung aus EPGC gebildet, wenngleich natürlich auch andere Materialien möglich sind.

Ein erfindungsgemäßer Rotor ermöglicht die Versteifung von Wickelköpfen bei entsprechenden Maschinen auch dann in robuster Weise, wenn ein Abstand zwischen Lücken 9 im Wickelkopfbereich konstruktionsbedingt sehr klein ist. Entsprechende Maschinen können insbesondere in Pumpspeicherkraftwerken eingesetzt werden.

## Patentansprüche

1. Rotor für eine elektrische Maschine, aufweisend ein Blechpaket (1) mit Nuten (2), in welchen Unterstäbe (3) und Oberstäbe (4) angeordnet sind, welche sich in Axialrichtung (5) über das Blechpaket (1) hinaus zur Bildung eines Wickelkopfes erstrecken, wobei jeweils ein Unterstab (3) einer Nut (2) mit einem Oberstab (4) einer anderen Nut (2) im Wickelkopf verbunden ist und sich Unterstäbe (3) und Oberstäbe (4) axial außerhalb des Blechpaketes (1) in einer Draufsicht an Kreuzungspunkten (8) kreuzen und zwischen den Kreuzungspunkten (8) Lücken (9) verbleiben, wobei eine Stützeinrichtung vorgesehen ist, welche einen radial innerhalb des Wickelkopfes angeordneten Rückhaltekörper (10) und zumindest einen Bügel (11) mit zwei Schenkeln (12) und einem Steg (13) aufweist, wobei der Bügel (11) sowohl mit dem Rückhaltekörper (10) als auch mit einem Oberstab (4) verbunden ist, um den Oberstab (4) mittels des Rückhaltekörpers (10) radial abzustützen, und wobei der Rückhaltekörper (10) zwischen den zwei Schenkeln (12) angeordnet ist, **dadurch gekennzeichnet, dass** der Steg (13) zwei Oberstäbe (4) überspannt, sodass die Schenkel (12) durch zwei Lücken (9) ragen, welche an unterschiedliche Oberstäbe (4) angrenzen.

2. Rotor nach Anspruch 1, **dadurch gekennzeichnet, dass** ein lösbar mit den Schenkeln (12) verbundenes Verschlussglied (15) vorgesehen ist, wobei bevorzugt vorgesehen ist, dass der Rückhaltekörper (10) über das Verschlussglied (15) mit dem Bügel (11) verbunden ist.

3. Rotor nach Anspruch 1 oder 2, **dadurch gekennzeichnet, dass** der Bügel (11) aus einem austenitischen Material und/oder aus einem kaltverformten Metall, insbesondere einem kaltgezogenen Stahl, gebildet ist.

4. Rotor nach einem der Ansprüche 1 bis 3, **dadurch gekennzeichnet, dass** der Rückhaltekörper (10) ein ferritisches Material, insbesondere einen ferritischen Stahl aufweist oder aus einem solchen Material gebildet ist.

5. Rotor nach einem der Ansprüche 1 bis 4, **dadurch gekennzeichnet, dass** der Rückhaltekörper (10) einen Feinkornstahl aufweist.

6. Rotor nach einem der Ansprüche 1 bis 5, **dadurch gekennzeichnet, dass** der Rückhaltekörper (10) einen ferritischen Innenteil und einen nicht magnetischen Außenteil, welcher insbesondere aus Aluminium, einem Faserverbundwerkstoff oder einem Hartgewebe, beispielsweise Epoxidharz-Glashartgewebe, besteht, aufweist.

7. Rotor nach einem der Ansprüche 1 bis 6, **dadurch gekennzeichnet, dass** ein mit dem Rotorblechpaket starr verbundenes Bauteil, insbesondere eine Druckplatte (30), in Radialrichtung (6) verlaufende erste Führungsmittel, insbesondere radiale Nuten (18), aufweist und der Rückhaltekörper (10) korrespondierende zweite Führungsmittel, insbesondere Führungszapfen (19), aufweist, welche in die ersten Führungsmittel eingreifen, sodass der Rückhaltekörper (10) durch die zusammenwirkenden Führungsmittel in Radialrichtung (6) bewegbar und in Umfangsrichtung (7) starr mit dem Blechpaket (1) verbunden ist.

8. Rotor nach Anspruch 7, **dadurch gekennzeichnet, dass** in Axialrichtung (5) mehrere, insbesondere drei, Rückhaltekörper (10) vorgesehen sind, welche über radiale Führungsmittel in Umfangsrichtung (7) kinematisch gekoppelt und in Radialrichtung (6) relativ zueinander bewegbar sind, wobei die radialen Führungsmittel bevorzugt durch radiale Nuten (18) und korrespondierende Führungszapfen (19) gebildet sind, welche in die radialen Nuten (18) eingreifen.

9. Rotor nach Anspruch 8, **dadurch gekennzeichnet, dass** die Rückhaltekörper (10) durch Schrauben axial mit der Druckplatte (30) verbunden sind, wobei sich die Schrauben durchgehend von einem axial äußersten Rückhaltekörper (10) bis zur Druckplatte (30) erstrecken und insbesondere unter einer definierten Vorspannung stehen.

10. Rotor nach einem der Ansprüche 8 bis 9, **dadurch gekennzeichnet, dass** der Rotor einen Rotorkörper mit entlang einer Umfangsrichtung (7) verteilt angeordneten Armen (21) und zwischen den Armen (21) angeordneten Öffnungen (22) aufweist, durch welche dem Rotorblechpaket eine Kühlluft zuführbar ist, wobei das Blechpaket (1) auf den Rotorkörper aufgeschrumpft ist, wobei die ersten Führungsmittel, welche sich radial erstrecken, entlang einer Umfangsrichtung (7) an Positionen angeordnet sind, welche mit Positionen der Arme (21) im Bereich einer Druckplatte (30) und/oder mit Positionen mittig zwischen den Armen (21) im Bereich der Druckplatte (30) korrespondieren.

11. Rotor nach einem der Ansprüche 1 bis10, **dadurch gekennzeichnet, dass** die Stege (13) etwa parallel zur Axialrichtung (5) orientiert sind.

12. Rotor nach einem der Ansprüche 1 bis 11, **dadurch gekennzeichnet, dass** zwischen dem Rückhaltekörper (10) und den Unterstäben (3) eine Gleiteinrichtung (24) angeordnet ist, welche an zumindest einer Seite eine Oberfläche aufweist, welche durch ein Material mit einem geringen Reibungskoeffizienten gebildet ist, insbesondere durch eine Teflon-Carbon-Platte (25)wobei bevorzugt vorgesehen ist, dass die Gleiteinrichtung (24) starr mit den Unterstäben (3) und axial bewegbar mit dem Rückhaltekörper (10) verbunden ist.

13. Rotor nach Anspruch 12, **dadurch gekennzeichnet, dass** die Gleiteinrichtung (24) eine Gleitlage aufweist, welche aus einem Material mit einem geringen Reibungskoeffizienten gebildet ist, insbesondere durch eine Teflon-Carbon-Platte (25) mit einer radialen Höhe von 1 mm bis 20 mm, insbesondere 2 mm bis 10 mm.

14. Rotor nach Anspruch 12 oder 13, **dadurch gekennzeichnet, dass** die Gleiteinrichtung (24) eine Lage (26) aufweist, welche durch ein paramagnetisches Material, insbesondere durch Aluminium oder ein Epoxidharz-Glashartgewebe, gebildet ist, wobei bevorzugt die Lage (26) in Axialrichtung (5) durchsetzende Bohrungen vorgesehen sind.

15. Rotor nach einem der Ansprüche 12 bis 14, **dadurch gekennzeichnet, dass** die Gleiteinrichtung (24) eine metallische Lage (26) aufweist, welche von den Unterstäben (3) durch eine mit der metallischen Lage (26) starr verbundene Isolierlage (27) getrennt ist, wobei die Isolierlage (27) insbesondere Epoxidharz-Glashartgewebe aufweist.

## Claims

1. Rotor for an electrical machine, having a laminated core (1) with slots (2), in which are arranged bottom bars (3) and top bars (4), which extend in the axial direction (5) beyond the laminated core (1) so as to form a winding head, wherein in each case a bottom bar (3) of a slot (2) is connected to an top bar (4) of another slot (2) in the winding head, and bottom bars (3) and top bars (4) intersect axially outside the laminated core (1) in plan view at crossing points (8), and gaps (9) remain between the crossing points (8), wherein a support device is provided, which has a retaining body (10) arranged radially within the winding head, and has at least one clip (11) with two legs (12) and a crosspiece (13), wherein the clip (11) is connected to both the retaining body (10) and an top bar (4), so as to support the top bar (4) radially by means of the retaining body (10), and wherein the retaining body (10) is arranged between the two legs (12), **characterised in that** the crosspiece (13) spans across two top bars (4), so that the legs (12) project through two gaps (9) that adjoin different top bars (4).

2. Rotor in accordance with Claim 1, **characterised in that** a closing link (15), detachably connected to the legs (12), is provided, wherein provision is preferably made for the retaining body (10) to be connected to the clip (11) via the closing link (15).

3. Rotor in accordance with Claims 1 or 2, **characterised in that** the clip (11) is formed from an austenitic material, and/or from a cold-formed metal, in particular a cold-drawn steel.

4. Rotor in accordance with one of the Claims 1 to 3, **characterised in that** the retaining body (10) comprises a ferritic material, in particular a ferritic steel, or is formed from such a material.

5. Rotor in accordance with one of the Claims 1 to 4, **characterised in that** the retaining body (10) comprises a fine-grained steel.

6. Rotor in accordance with one of the Claims 1 to 5, **characterised in that** the retaining body (10) comprises a ferritic inner part and a non-magnetic outer part, which consists in particular of aluminium, a fibre-composite material, or a laminate, for example an epoxy resin-glass laminate.

7. Rotor in accordance with one of the Claims 1 to 6, **characterised in that** a component rigidly connected to the rotor laminated core, in particular a pressure plate (30), comprises first means of guidance extending in the radial direction (6), in particular radial slots (18), and the retaining body (10) comprises corresponding second means of guidance, in particular guide pins (19), which engage in the first means of guidance, such that the retaining body (10) can be moved in the radial direction (6) by the interacting means of guidance, and is rigidly connected to the laminated core (1) in the circumferential direction (7).

8. Rotor in accordance with Claim 7, **characterised in that** a plurality of, in particular three, retaining bodies (10) are provided in the axial direction (5), which are kinematically coupled via radial means of guidance in the circumferential direction (7), and can be moved relative to one another in the radial direction (6), wherein the radial means of guidance are preferably formed by radial slots (18), and corresponding guide pins (19), which engage in the radial slots (18).

9. Rotor in accordance with Claim 8, **characterised in that** the retaining bodies (10) are axially connected to the pressure plate (30) by means of screws, wherein the screws extend continuously from an axially-outermost retaining body (10) to the pressure plate (30), and in particular are subjected to a defined preload.

10. Rotor in accordance with one of the Claims 8 to 9 **characterised in that** the rotor comprises a rotor body, with arms (21) arranged distributed along a circumferential direction (7), and openings (22) arranged between the arms (21), through which openings a cooling air can be supplied to the rotor laminated core, wherein the laminated core (1) is shrunk onto the rotor body, wherein the first means of guidance, which extend radially, are arranged along a circumferential direction (7) at positions that correspond to positions of the arms (21) in the region of a pressure plate (30), and/or correspond to positions centred between the arms (21) in the region of the pressure plate (30).

11. Rotor in accordance with one of the Claims 1 to 10, **characterised in that** the crosspiece (13) are orientated approximately parallel to the axial direction (5).

12. Rotor in accordance with one of the Claims 1 to 11, **characterised in that** a sliding device (24) is arranged between the retaining body (10) and the bottom bars (3), which has a surface on at least one side, which surface is formed by a material with a low coefficient of friction, in particular by a Teflon-carbon plate (25), wherein the sliding device (24) is preferably rigidly connected to the bottom bars (3), and is connected to the retaining body (10) such that it can be moved axially.

13. Rotor in accordance with Claim 12, **characterised in that** the sliding device (24) has a sliding layer, which is formed from a material with a low coefficient of friction, in particular by a Teflon-carbon plate (25) with a radial height between 1 mm and 20 mm, in particular between 2 mm and 10 mm.

14. Rotor in accordance with Claim 12 or 13, **characterised in that** the sliding device (24) has a layer (26) that is formed by a paramagnetic material, in particular by aluminium, or an epoxy resin-glass laminate, wherein holes are preferably provided that penetrate through the layer (26) in the axial direction (5).

15. Rotor in accordance with one of the Claims 12 to 14, **characterised in that** the sliding device (24) has a metallic layer (26), which is separated from the bottom bars (3) by an insulation layer (27) that is rigidly connected to the metallic layer (26), wherein the insulation layer (27) comprises, in particular, an epoxy resin-glass laminate.

## Revendications

1. Rotor pour une machine électrique, comportant un paquet de tôles (1) avec des rainures (2), dans lesquelles sont disposés des barreaux inférieurs (3) et des barreaux supérieurs (4), lesquels s'étendent en direction axiale (5) au-delà du paquet de tôles (1) pour former une tête d'enroulement, sachant qu'à chaque fois un barreau inférieur (3) d'une rainure (2) est relié à un barreau supérieur (4) d'une autre rainure (2) dans la tête d'enroulement et les barreaux inférieurs (3) et barreaux supérieurs (4), en vue de dessus, se croisent axialement en dehors du paquet de tôles (1) à des points de croisement (8) et des cavités (9) demeurent entre les points de croisement (8), sachant qu'un système de support est prévu, lequel comporte un corps de retenue (10) disposé radialement à l'intérieur de la tête d'enroulement et au moins un étrier (11) avec deux branches (12) et une moulure (13), sachant que l'étrier (11) est relié aussi bien avec le corps de retenue (10) qu'avec un barreau supérieur (4) pour soutenir radialement le barreau supérieur (4) au moyen du corps de retenue (10) et sachant que le corps de retenue (10) est disposé entre les deux branches (12), **caractérisé en ce que** la moulure (13) surplombe deux barreaux supérieurs (4) de sorte que les branches (12) dépassent à travers deux cavités (9), lesquelles sont limitrophes des différents barreaux supérieurs (4).

2. Rotor selon la revendication 1, ***caractérisé en ce qu***'un organe de fermeture (15) relié de façon amovible aux branches (12) est prévu, sachant de préférence qu'il est prévu que le corps de retenue (10) soit relié à l'étrier (11) par l'organe de fermeture (15).

3. Rotor selon la revendication 1 ou 2, ***caractérisé en ce que*** l'étrier (11) est formé d'un matériau austénitique et/ou d'un métal formé à froid, en particulier d'un acier étiré à froid.

4. Rotor selon l'une quelconque des revendications 1 à 3, ***caractérisé en* ce que** le corps de retenue (10) comporte un matériau ferritique, en particulier un acier ferritique ou est formé d'un matériau analogue.

5. Rotor selon l'une quelconque des revendications 1 à 4, ***caractérisé en* ce que** le corps de retenue (10) comporte un acier à grain fin.

6. Rotor selon l'une quelconque des revendications 1 à 5, ***caractérisé en* ce que** le corps de retenue (10) comporte une partie intérieure ferritique et une partie extérieure non magnétique, laquelle est composée en particulier d'aluminium, d'un matériau composite à base de fibres ou d'un tissu dur, par exemple de tissu de fibres de verre à base de résine époxy.

7. Rotor selon l'une quelconque des revendications 1 à 6, ***caractérisé en* ce *qu***'un composant relié de façon rigide au paquet de tôles de rotor, en particulier une plaque de pression (30), comporte des premiers moyens de guidage passant dans la direction radiale (6), en particulier des rainures radiales (18) et le corps de retenue (10) comporte des deuxièmes moyens de guidage correspondants, en particulier des tenons de guidage (19), lesquels viennent en prise dans les premiers moyens de guidage de sorte que le corps de retenue (10) est relié de façon mobile par les moyens de guidage coopérants au paquet de tôles (1) dans la direction radiale (6) et de façon rigide dans la direction périphérique (7).

8. Rotor selon la revendication 7, ***caractérisé en* ce que** plusieurs corps de retenue (10), en particulier trois, sont prévus en direction axiale (5), lesquels sont couplés cinématiquement par des moyens de guidage radiaux dans la direction périphérique (7) et peuvent être mobiles l'un par rapport à l'autre en direction radiale (6), sachant que les moyens de guidage radiaux sont de préférence formés par des rainures radiales (18) et des tenons de guidage correspondants (19), lesquels viennent en prise dans les rainures radiales (18).

9. Rotor selon la revendication 8, ***caractérisé en* ce *que*** les corps de retenue (10) sont reliés axialement à la plaque de pression (30) avec des vis, sachant que les vis s'étendent traversant d'un corps de retenue (10) en extrémité axiale jusqu'à la plaque de pression (30) et se trouvent en particulier dans une précontrainte définie.

10. Rotor selon l'une quelconque des revendications 8 à 9, ***caractérisé en ce que*** le rotor comporte un corps de rotor avec des bras (21) disposés répartis le long d'une direction périphérique (7) et des ouvertures (22) disposées entre les bras (21) à travers lesquelles un air froid peut être acheminé au paquet de tôles de rotor, sachant que le paquet de tôles (1) est emmanché sur le corps de rotor, sachant que les premiers moyens de guidage qui s'étendent radialement, sont disposés le long d'une direction périphérique (7) à des positions, qui correspondent aux positions des bras (21) dans la zone d'une plaque de pression (30) et/ou à des positions situées au centre entre les bras (21) dans la zone de la plaque de pression (30).

11. Rotor selon l'une quelconque des revendications 1 à 10, ***caractérisé en* ce que** les moulures (13) sont orientées à peu près parallèlement à la direction axiale (5).

12. Rotor selon l'une quelconque des revendications 1 à 11, ***caractérisé en ce qu***'un système coulissant (24) est disposé entre le corps de retenue (10) et les barreaux inférieurs (3), lequel comporte sur au moins un côté une surface, laquelle est formée par un matériau avec un faible coefficient de frottement, en particulier par une plaque téflon-carbone (25), sachant qu'il est de préférence prévu que le système coulissant (24) est relié de façon rigide aux barreaux inférieurs (3) et de façon axialement mobile au corps de retenue (10).

13. Rotor selon la revendication 12, ***caractérisé en* ce que** le système coulissant (24) comporte une couche de glissement, laquelle est formée à partir d'un matériau avec un faible coefficient de frottement, en particulier par une plaque téflon-carbone (25) avec une hauteur radiale de 1 mm à 20 mm, en particulier de 2 mm à 10 mm.

14. Rotor selon la revendication 12 ou 13, ***caractérisé en ce que*** le système coulissant (24) comporte une couche (26), laquelle est formée par un matériau paramagnétique, en particulier par de l'aluminium ou un tissu de fibres de verre à base de résine époxy, sachant de préférence que des trous traversants dans la direction axiale (5) sont prévus dans la couche (26).

15. Rotor selon l'une quelconque des revendications 12 à 14, ***caractérisé en ce que*** le système coulissant (24) comporte une couche métallique (26), laquelle est séparée des barreaux inférieurs (3) par une couche isolante (27) reliée de façon rigide à la couche métallique (26), sachant que la couche isolante (27) comporte en particulier un tissu de fibres de verre à base de résine époxy.
